# DEMANDE DE BREVET EUROPEEN

(11) **EP 0 611 177 A1**
(43) Date de publication de la demande: **17.08.1994**
(21) Numéro de dépôt: 94400085.0
(22) Date de dépôt: 13.01.1994
(51) Int. Cl.: F25D 3/11, A61J 1/00

(54) **Procédé et dispositif de congélation de substances contenues dans les récipients**

(30) Priorité: 10.02.1993 FR 9301471
(71) Demandeur: L'AIR LIQUIDE, SOCIETE ANONYME POUR L'ETUDE ET L'EXPLOITATION DES PROCEDES GEORGES CLAUDE, F-75321 Paris Cédex 07 (FR)
(72) Inventeur: Germain, Jean-Pierre, F-78180 Montigny Le Bretonneux (FR)
(74) Mandataire: Le Moenner, Gabriel

(57) **Abrégé**

Le récipient contenant la substance à congeler est placé sur un support transporteur, avantageusement à surface vibrante (7), et est déplacé le long d'un trajet défini, en étant maintenu partiellement immergé dans un gaz liquéfié (13) déversé (11) sur le support.

Application notamment à l'industrie pharmaceutique.

## Description

La présente invention concerne les procédés et dispositifs de congélation de substances contenues dans des récipients, notamment dans les industries pharmaceutiques, vétérinaires ou cosmétiques.

Dans ces industries, il existe le besoin de congeler, en vue de leur transfert et stockage ultérieurs, des produits fragiles ou instables, notamment des solutions de produits actifs sédimentables, juste après leur fractionnement et conditionnement dans des flacons. Actuellement, juste après conditionnement, le flacon est placé manuellement dans un bain cryogénique, typiquement de l'alcool avec de la neige carbonique, puis pré-bouchés. Ces procédés connus sont délicats à mettre en oeuvre et ne permettent pas d'aboutir à des refroidissements très rapides.

La présente invention a pour objet de proposer un procédé et un dispositif permettant de congeler très rapidement des substances contenues dans des récipients et autorisant une automatisation poussée.

Pour ce faire, selon une caractéristique de l'invention, le procédé comporte les étapes de placer le récipient sur un support et d'acheminer, le long d'un trajet, le récipient sur son support, maintenu partiellement immergé dans un gaz liquéfié.

Selon d'autres caractéristiques de l'invention :
- le récipient est acheminé sur une surface vibrante constituant le support et recouverte de gaz liquéfié, dont le niveau n'excède avantageusement pas la hauteur de la substance dans le récipient.

La présente invention a également pour objet de proposer un dispositif pour la mise en oeuvre de ce procédé et caractérisé en ce qu'il comprend un support transporteur acheminant les récipients le long d'un trajet et des moyens pour maintenir un niveau de gaz liquéfié sur le support le long d'un trajet.

De préférence, le support transporteur est un couloir vibrant qui comprend avantageusement deux parois en vis-à-vis définissant entre elles un chenal de guidage pour les récipients, et de part et d'autre de ce chenal, une chambre de distribution de gaz liquéfié.

Le document FR-A-2.674.320, au nom de la Demanderesse, décrit un tunnel de congélation de produits en vrac, typiquement de produits alimentaires, déversés dans une auge vibrante.

D'autres caractéristiques et avantages de la présente invention ressortiront de la description suivante d'un mode de réalisation, donnée à titre illustratif mais nullement limitatif, faite en relation avec les dessins annexés, sur lesquels :
- la figure 1 est une vue schématique en coupe longitudinale d'un dispositif de congélation selon l'invention ; et
- la figure 2 est une vue schématique en coupe transversale du dispositif de la figure 1.

Sur les figures, on a représenté un dispositif de congélation comprenant, avantageusement dans un capotage isotherme (non représenté), une structure vibrante 1, actionnée par un dispositif de vibration 2 et comprenant une partie principale en forme de gouttière à section en U définissant intérieurement un trajet 3 pour des flacons 4 provenant d'un poste de conditionnement où un mélange instable ou fragile de produits est déversé dans le flacon.

Le couloir vibrant 1, fermé à sa partie supérieure par un couvercle 5, comporte une surface intérieure en U 6, formant un fond 7 pour le chenal 3 et délimitant intérieurement une masse isolante 8. Dans le chenal 3 sont disposées, en vis-à-vis, deux plaques parallèles 9 bordant latéralement le trajet pour les récipients 4 et définissant, avec les surfaces verticales intérieures 6, deux chambres verticales 10 dans lesquelles sont disposées des canalisations 11 de déversement de gaz liquéfié et 12 d'évacuation du gaz vaporisé lors du déversement du gaz liquéfié. Les parois 9 s'étendent vers le bas jusqu'au voisinage de la paroi de fond 7 et ne sont pas hermétiquement reliées à cette dernière de façon à ménager des passages de liquide entre le chenal intérieur 3 et les chambres 10 pour maintenir, dans le chenal 3, un niveau constant de gaz liquide 13 n'excédant pas la hauteur h de substance dans le récipient 4. Avantageusement, la paroi de fond 7 est constituée d'une tôle nervurée ou gaufrée, typiquement en acier inoxydable, comme décrit dans la demande de brevet française déposée ce même jour par la Demanderesse sous le titre "Dispositif de congélation à couloir vibrant".

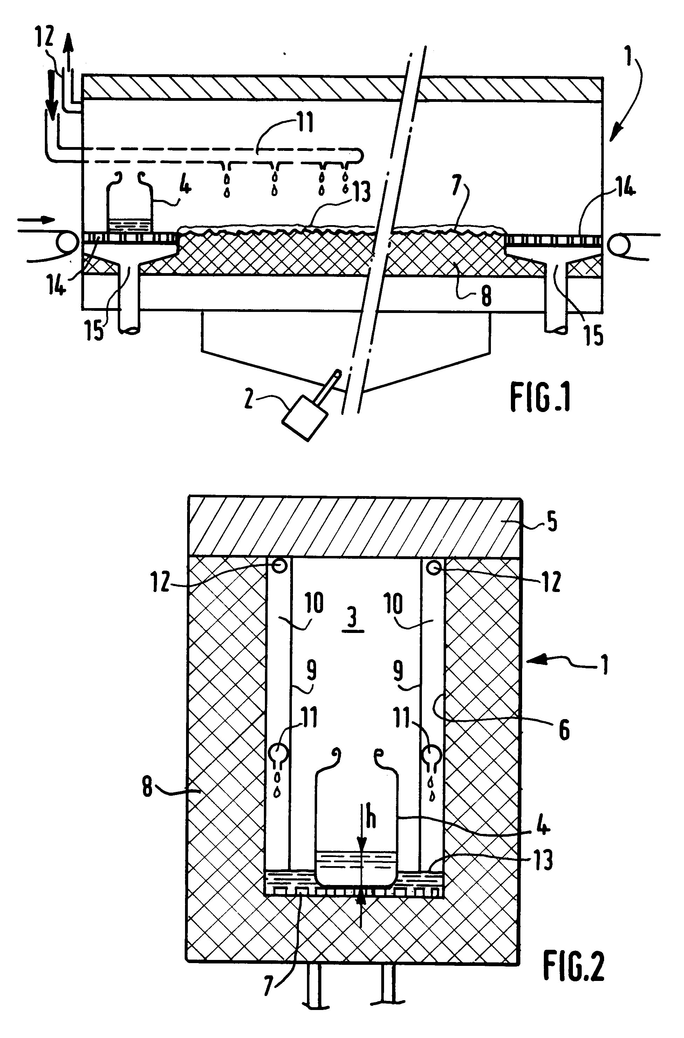

Comme on le voit sur la figure 1, les planchers des postes d'accès et de sortie en amont et en aval du couloir vibrant 7 sont formés par des parois perforées 14 au-dessus de dispositifs 15 pour la récupération et le recyclage du gaz liquide s'écoulant aux extrémités du couloir 7. Un récipient 4 chargé, amené au poste d'accès, avance de lui-même, sous l'effet des vibrations de basse fréquence imparties à la structure 1, le long du chenal, en contact permanent avec le film de gaz liquéfié, typiquement de l'azote liquide, jusqu'au poste de sortie où le récipient, refroidi, est obturé puis repris pour transfert et stockage, par exemple dans un cristallisoir.

A titre d'exemple, pour un petit flacon pharmaceutique, la température de la substance dans le flacon est abaissé à -110°C après un trajet dans le chenal d'une durée de 60 secondes, la température atteignant -50°C après un séjour le long du trajet de seulement 30 secondes. Dans les deux cas, l'épaisseur du film de gaz liquéfié sur le support vibrant est de 5 mm. On notera, pour comparaison, qu'en posant le même flacon dans un bain de gaz liquéfié de 5 mm d'épaisseur, la température n'atteint que -12°C au bout de 50 secondes.

Quoique la présente invention ait été décrite en relation avec un mode de réalisation particulier, elle ne s'en trouve pas limitée pour autant mais est au contraire susceptible de modifications et de variantes qui apparaîtront à l'homme de l'art. En particulier, au lieu d'être rectiligne, comme représenté sur les dessins, le trajet de convoiement des récipients peut être curviligne, voire circulaire.

## Revendications

1. Procédé de congélation de substances contenues dans un récipient, caractérisé en ce qu'il comporte les étapes de placer le récipient (4) sur un support (7) et d'acheminer le long d'un trajet le récipient sur son support, maintenu partiellement immergé dans un gaz liquéfié (13).

2. Procédé selon la revendication 1, caractérisé en ce que le récipient (4) est acheminé sur une surface vibrante (7) constituant le support et recouverte de gaz liquéfié (13).

3. Procédé selon la revendication 2, caractérisé en ce que le niveau du gaz liquéfié (13) n'excède pas la hauteur de la substance dans le récipient (4).

4. Procédé selon la revendication 3, caractérisé en ce qu'il comporte l'étape de maintenir sensiblement constant le niveau du gaz liquéfié (13) sur le support (7).

5. Dispositif pour la mise en oeuvre du procédé selon l'une des revendications précédentes, caractérisé en ce qu'il comprend un support transporteur (7) acheminant le récipient (4) le long d'un trajet (3), et des moyens (11) pour maintenir un niveau de gaz liquéfié (13) sur le suppport (7) le long du trajet (3).

6. Dispositif selon la revendication 5, caractérisé en ce que le support transporteur est constitué par un couloir vibrant (1).

7. Dispositif selon la revendication 6, caractérisé en ce que le couloir vibrant (1) comprend deux parois en vis-à-vis (9) définissant entre elles un chenal (3) de guidage pour les récipients (4) et, de part et d'autre, une chambre (10) de distribution de gaz liquéfié.

8. Dispositif selon l'une des revendications 6 et 7, caractérisé en ce que le fond (7) du couloir vibrant (1) est réalisé en tôle gaufrée.
